# EUROPÄISCHE PATENTANMELDUNG

(11) **EP 2 154 409 A1**
(43) Veröffentlichungstag der Anmeldung: **17.02.2010**
(21) Anmeldenummer: 08013721.9
(22) Anmeldetag: 31.07.2008
(51) Int. Cl.: F16L 37/084, F16L 47/06, F16L 47/12

(54) **Rohr für eine aus mehreren miteinander zu verbindenden bestehende Rohrleitung und Verfahren zur Verbindung von derartigen Rohren**

(71) Anmelder: AGRU KUNSTSTOFFTECHNIK GMBH, 4540 Bad Hall (AT)
(72) Erfinder: Mayr, Dietmar, 4552 Wartberg (AT)
(74) Vertreter: Luderschmidt, Schüler & Partner

(57) **Zusammenfassung**

Die erfindungsgemäßen Rohre zeichnen sich dadurch aus, dass sie eine Verbindung ohne Schweißen erlauben, wobei auf Dichtringe verzichtet werden kann. Das erfindungsgemäße Rohr weist ein äußeres Ansatzstück (2) und ein inneres Ansatzstück (3) auf, wobei das äußere Ansatzstück als Aufnahmestück und das innere Ansatzstück als Einsteckstück ausgebildet sind, um jeweils zwei Rohre miteinander verbinden zu können. Die beiden Ansatzstücke (2, 3) verfügen nicht über eine zylindrische Anlagefläche, sondern weisen gekrümmte Anlageflächen auf. Das äußere Ansatzstück weist eine in Längsrichtung gekrümmte Innenfläche auf, während das innere Ansatzstück eine in Längsrichtung gekrümmte Außenfläche aufweist, wobei die Flächen des inneren und äußeren Ansatzstücks unterschiedliche Krümmungen haben. Darüber hinaus zeichnet sich das erfindungsgemäße Rohr dadurch aus, dass der maximale Innendurchmesser der gekrümmten Innenfläche des äußeren Ansatzstücks kleiner als der maximale Außendurchmesser der gekrümmten Außenfläche des inneren Ansatzstücks ist. Dadurch wird erreicht, dass beim Zusammenstecken der einzelnen Rohre eine Vorspannung entsteht.

## Beschreibung

Die Erfindung bezieht sich auf ein Rohr für eine aus mehreren miteinander zu verbindenden Rohren bestehende Rohrleitung, wobei die Rohre ohne Schweißverbindung zusammengefügt sind. Darüber hinaus betrifft die Erfindung ein Verfahren zum Verbinden von derartigen Rohren, wobei die Rohre nicht miteinander verschweißt werden.

Rohrleitungen für flüssige oder gasförmige Medien sind in unterschiedlicher Ausbildung bekannt. Die Rohrleitungen bestehen aus mehreren Rohren, die beim Verlegen der Rohrleitung zusammengefügt werden.

Beim Zusammenfügen der einzelnen Rohre zu der Rohrleitung werden insbesondere dann hohe Anforderungen an die Dichtigkeit gestellt, wenn durch die Rohrleitung gasförmige Medien unter Druck geleitet werden. Den hohen Anforderungen an die Dichtigkeit genügen im Allgemeinen Rohrleitungen, deren Rohre vor Ort miteinander verschweißt werden. Das bekannte Verschweißen von Kunststoffrohren hat aber den Nachteil, dass das Verfahren sehr zeitaufwendig ist, da die Rohre nach dem Schweißen eine relativ lange Abkühlphase durchlaufen und die beim Schweißen an der Rohrinnenwand entstehenden Schweißwulste entfernt werden müssen. Darüber hinaus ist eine genaue Fixierung der miteinander zu verschweißenden Rohre erforderlich.

Neben Schweißverbindungen sind für Rohre auch Steckverbindungen bekannt, bei denen die Rohre einrastend miteinander verbunden werden. Die EP 1 004 811 A2 beispielsweise beschreibt eine Rohrleitung, die aus ineinander gesteckten Rohren besteht. Die Rohre verfügen an ihren Enden über Rastmittel, mit denen die Rohre in Längsrichtung gesichert werden.

Die DE 200 17 639 U1 schlägt vor, zwischen den Rastmitteln der Rohre Dichtringe anzuordnen. Zusätzliche Dichtringe können sich aber auch als nachteilig erweisen. Beispielsweise besteht die Gefahr, dass die Dichtringe beim Zusammenfügen der Rohre auf der Baustelle aus der Nut herausrutschen oder beschädigt werden.

Die EP 1 375 114 A2 beschreibt ein Verfahren zur Herstellung einer Rohrleitung aus einzelnen Rohren, bei dem die Rohre sowohl einrastend miteinander verbunden als auch miteinander verschweißt werden.

Der Erfindung liegt die Aufgabe zugrunde, Rohre für eine Rohrleitung bereit zu stellen, die sich sicher und schnell miteinander verbinden lassen.

Die Lösung dieser Aufgabe erfolgt erfindungsgemäß mit den Merkmalen des Patentanspruchs 1. Vorteilhafte Ausführungsformen sind Gegenstand der Unteransprüche.

Die erfindungsgemäßen Rohre zeichnen sich dadurch aus, dass sie eine Verbindung ohne Schweißen erlauben, wobei auf Dichtringe verzichtet werden kann. Dadurch lassen sich die Rohre sicher und einfach miteinander verbinden. Dabei genügen die miteinander verbundenen Rohre relativ hohen Anforderungen an die Dichtigkeit der Rohrleitung.

Das erfindungsgemäße Rohr weist ein inneres, in den Zeichnungen vorderes Ansatzstück und ein äußeres, in den Zeichnungen hinteres Ansatzstück auf, wobei das innere Ansatzstück als Einsteckstück und das äußere Ansatzstück als Aufnahmestück ausgebildet sind, um jeweils zwei Rohre miteinander verbinden zu können.

Die beiden Ansatzstücke verfügen nicht über eine zylindrische Anlagefläche, sondern weisen gekrümmte Anlageflächen auf. Das äußere Ansatzstück weist eine in Längsrichtung gekrümmte Innenfläche auf, während das innere Ansatzstück eine in Längsrichtung gekrümmte Außenfläche aufweist, wobei die Flächen des inneren und äußeren Ansatzstücks unterschiedliche Krümmungen haben.

Darüber hinaus zeichnet sich das erfindungsgemäße Rohr dadurch aus, dass der maximale Innendurchmesser der gekrümmten Innenfläche des äußeren Ansatzstücks kleiner als der maximale Außendurchmesser der gekrümmten Außenfläche des inneren Ansatzstücks ist. Dadurch wird erreicht, dass beim Zusammenstecken der einzelnen Rohre eine Vorspannung entsteht. Da die beiden Ansatzstücke aber nicht einen geradlinigen, sondern gekrümmten Verlauf mit einer unterschiedlichen Krümmung haben, kann es nicht zu einem relativ großflächigen, sondern nur zu einem relativ kleinflächigen, möglicherweise nur linienförmigen Kontakt zwischen den Anlageflächen der ineinander gefügten Ansatzstücke kommen.

Es hat sich in Versuchen gezeigt, dass in der Praxis ein relativ kleinflächiger, möglicherweise sogar linienförmiger Kontakt zwischen den Rohren zu einer relativen hohen Dichtigkeit führt, wenn die Rohre unter einer Vorspannung stehen. Diese Dichtigkeit bleibt bei dem relativ kleinflächigen, möglicherweise sogar linienförmigen Kontakt zwischen den Ansatzstücken der Rohre selbst dann erhalten, wenn aufgrund von Herstellungstoleranzen, aber auch späteren Verformungen des Materials die Radien der Ansatzstücke von dem Sollmaß abweichen.

Die besondere Ausbildung der Ansatzstücke des erfindungsgemäßen Rohrs stellt sicher, dass sich die Rohre einerseits zumindest mit geeigneten technischen Hilfsmitteln einfach zusammenstecken lassen und andererseits eine ausreichende Vorspannung haben.

Die Dichtigkeit der Rohrleitung wird noch dadurch weiter erhöht, wenn durch die Rohrleitung ein flüssiges Medium geleitet wird, das selbst unter Druck steht. Dies führt zu einer weiteren Erhöhung der Vorspannung, so dass die beiden Ansatzstücke noch stärker gegeneinander gepresst werden.

Es ist grundsätzlich unerheblich, welche Kontur die Ansatzstücke in Längsrichtung haben, solange sichergestellt ist, dass die Ansatzstücke nicht über die gesamte Fläche, sondern vorzugsweise nur an einer relativ kleinen Fläche, gegebenenfalls nur an einer Kontaktlinie miteinander in Berührung kommen. Vorteilhafterweise haben die gekrümmten Flächen des inneren und äußeren Ansatzstücks in Längsrichtung zumindest über einen Teil ihrer Länge eine Krümmung in die gleiche Richtung, d.h. die Krümmungen der Ansatzstücke werden durch einen Radius beschrieben, wobei sich die Radien des inneren und äußeren Ansatzstücks aber voneinander unterscheiden.

Bei einer bevorzugten Ausführungsform ist der Krümmungsradius der gekrümmten Fläche des äußeren Ansatzstücks größer als der Krümmungsradius der gekrümmten Fläche des inneren Ansatzstücks, d.h. die äußere Anlagefläche ist stärker als die innere Anlagefläche gekrümmt. Es ist grundsätzlich aber auch möglich, dass die gekrümmte Fläche des äußeren Ansatzstücks einen kleineren Krümmungsradius als die gekrümmte Fläche des inneren Ansatzstücks hat.

Das äußere Ansatzstück weist bei einer weiteren bevorzugten Ausführungsform eine in Längsrichtung nach außen gekrümmte Innenfläche auf, d.h. an der Wandung des Rohrs ist in diesem Bereich eine muldenförmige Vertiefung ausgebildet, und das innere Ansatzstück weist eine in Längsrichtung nach außen gekrümmte Außenfläche auf. Es ist grundsätzlich aber auch möglich, dass das äußere Ansatzstück eine nach innen gekrümmte Innenfläche und das innere Ansatzstück eine nach innen gekrümmte Außenfläche aufweist.

Eine weitere besonders bevorzugte Ausführungsform sieht Rastmittel an dem inneren und äußeren Ansatzstück vor, die derart ausgebildet sind, dass die Ansatzstücke beim Zusammenstecken der Rohre einrasten. Dadurch sind die Rohre in Längsrichtung gesichert. Es hat sich in der Praxis gezeigt, dass mit den Rastmitteln die Zugkraft erhöht werden kann, um die Rohre wieder zu trennen. Zur Gewährleistung der erforderlichen Dichtigkeit sind die Rastmittel aber nicht zwingend erforderlich.

Die Rastmittel umfassen bei einer bevorzugten Ausführungsform eine vorspringende Nase, die an dem freien Ende des inneren Ansatzstücks und eine entsprechende Ausnehmung, die an dem nicht freien Ende des äußeren Ansatzstücks vorgesehen sind. Es ist aber auch möglich, dass die vorspringende Nase an dem äußeren Ansatzstück und die Ausnehmung an dem inneren Ansatzstück vorgesehen sind. Beim Zusammenstecken der Rohre schnappt die vorspringende Nase einrastend in die Ausnehmung ein. Dadurch sind die Rohre in axiale Richtung gesichert. An der vorspringenden Nase und/oder der Ausnehmung können Hinterschneidungen vorgesehen sein. Vorzugsweise sind an den freien Enden der Ansatzstücke Fasen vorgesehen, die das Zusammenfügen der Rohre vereinfachen.

Das innere Ansatzstück und das äußere Ansatzstück weisen vor dem Zusammenfügen der Rohre vorzugsweise den gleichen Außen- bzw. Innendurchmesser wie das Rohrmittelstück auf, so dass das Rohr über seine gesamte Länge den gleichen Außen- bzw. Innendurchmesser hat. Wenn die Rohre zu der Rohrleitung zusammengefügt sind, tritt aufgrund der Vorspannung im Steckmuffenbereich eine leichte Wölbung nach außen auf. Bei dünnwandigen Rohren kann aber eine Erhöhung der Wanddicke der Rohre im Steckmuffenbereich von Vorteil sein. Dann wird insbesondere der Innendurchmesser des inneren Ansatzstücks verringert, wobei der Außendurchmesser des Rohrs nicht vergrößert wird.

Das Rohr ist vorzugsweise ein Kunststoffrohr, das mit den bekannten Herstellungsverfahren in großen Stückzahlen kostengünstig hergestellt werden kann. Die für die zu befördernden Medien geeigneten Kunststoffe sind dem Fachmann bekannt. Wenn aggressive Medien durch die Rohrleitung geleitet werden sollen, müssen die Kunststoffe gegenüber diesen aggressiven Medien resistent sein. Auch sollten die Kunststoffe eine ausreichende Abriebfestigkeit aufweisen.

Das erfindungsgemäße Verfahren zum Verbinden von zwei erfindungsgemäßen Rohren zeichnet sich dadurch aus, dass der zusätzliche Schritt des Verschweißens der Rohre nicht erforderlich ist. Zum Verbinden der Rohre wird lediglich das innere Ansatzstück des einen Rohrs in das äußere Ansatzstück des anderen Rohrs eingesteckt.

Die erfindungsgemäßen Rohre erweisen sich insbesondere dann als besonders vorteilhaft, wenn durch die Rohrleitung ein unter Druck stehendes Medium geleitet wird, so dass die Dichtigkeit aufgrund des höheren Drucks, mit dem die Ansatzstücke zusammengepresst werden, noch weiter erhöht wird. Dies ist insbesondere deshalb von Vorteil, da gerade bei der Beförderung von unter Druck stehenden Medien besonders hohe Anforderungen an die Dichtigkeit gestellt werden. Der Aufbau eines Innendrucks ist aber zur Herstellung der Dichtigkeit nicht zwingend erforderlich. Die erfindungsgemäßen Rohre sind auch für drucklose Anwendungen bestimmt.

Im Folgenden wird ein Ausführungsbeispiel der Erfindung unter Bezugnahme auf die Zeichnungen näher erläutert.

Es zeigen:
- Fig. 1: eine perspektivische Darstellung des erfindungsgemäßen Rohrs aus einer Ansicht, in der insbesondere das innere Ansatzstück des Rohrs deutlich zu erkennen ist,
- Fig. 2: eine perspektivische Darstellung des erfindungsgemäßen Rohrs in einer Ansicht, in der insbesondere das äußere Ansatzstück deutlich zu erkennen ist,
- Fig. 3: einen Längsschnitt durch das erfindungsgemäße Rohr,
- Fig. 4: den Ausschnitt X von Fig. 3 in vergrößerter Darstellung,
- Fig. 5: den Ausschnitt Y von Fig. 3 in vergrößerter Darstellung,
- Fig. 6: eine Ansicht in Pfeilrichtung A von Fig. 3,
- Fig. 7: zwei miteinander verbundene Rohre in geschnittener Darstellung und
- Fig. 8: den Ausschnitt X von Fig. 7 in vergrößerter Darstellung.

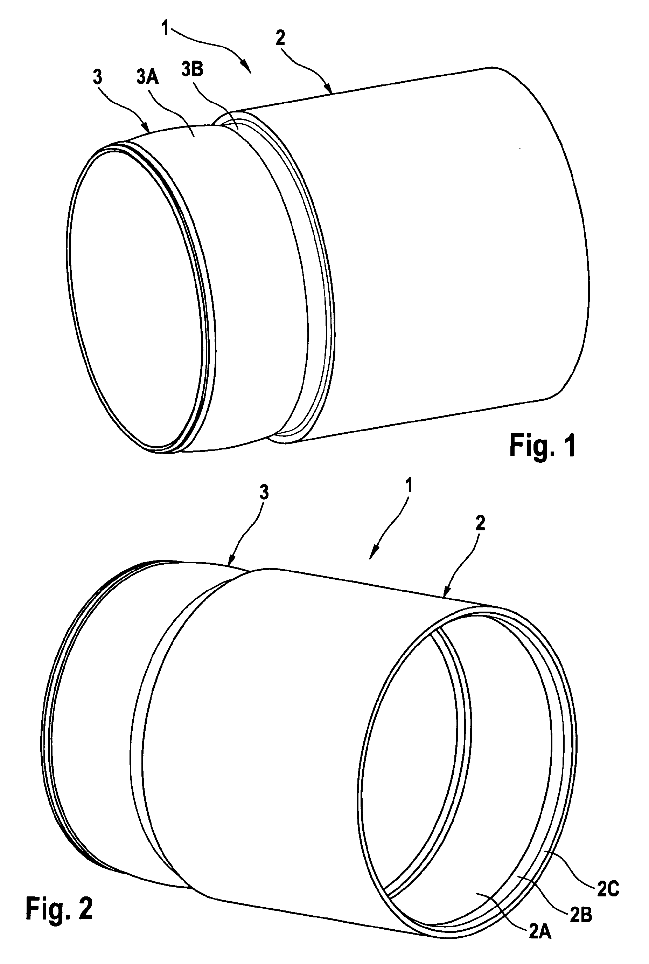

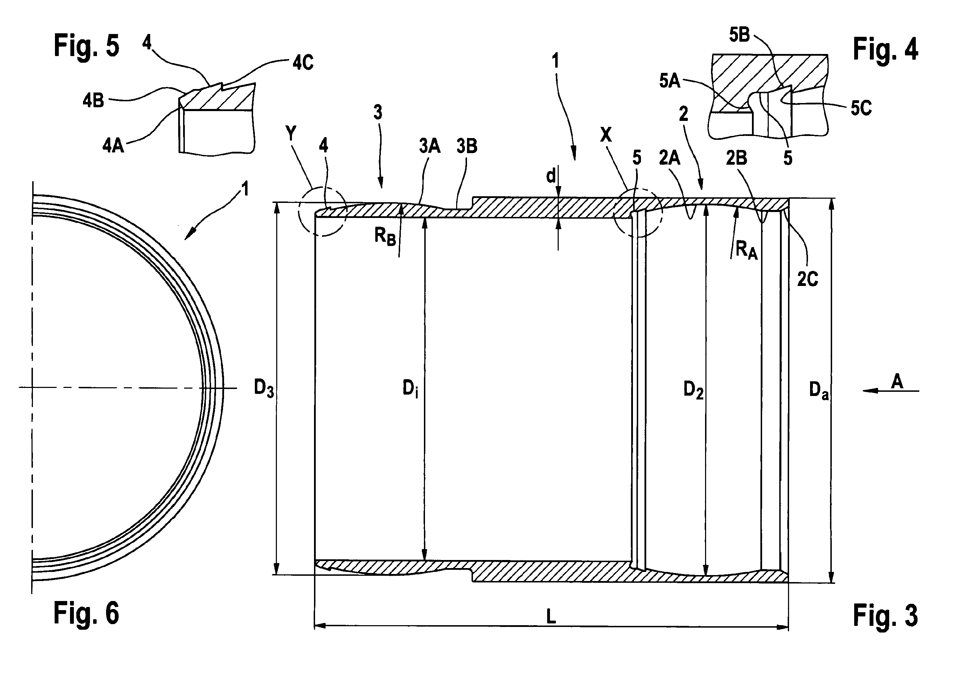

Die Figuren 1 und 2 zeigen das erfindungsgemäße Rohr in perspektivischer Darstellung, während Figur 3 einen Schnitt durch das Rohr zeigt.

Bei dem erfindungsgemäßen Rohr handelt es sich um ein Kunststoffrohr, das einen Außendurchmesser Dₐ aufweist. Beispielsweise beträgt der Außendurchmesser 242 mm. Das Rohr hat eine Wandstärke d, die beispielsweise 13 mm beträgt. Das Rohr hat die Länge L, die beispielsweise 2000 mm beträgt. In den Figuren ist das Rohr verkürzt dargestellt. Die Figuren zeigen nur ein Ausführungsbeispiel. Die Rohre können aber auch andere Dimensionen haben, beispielsweise einen Außendurchmesser von bis zu 2000 mm.

Das Rohr weist ein inneres Ansatzstück 3 und ein äußeres Ansatzstück 2 auf, deren Wandstärke jeweils geringer als die Wandstärke d des Rohrmittelstücks 1 ist. Das äußere Ansatzstück 2 weist einen in Längsrichtung des Rohrs gleich bleibenden Außendurchmesser auf, der dem Außendurchmesser Dₐ des Rohrmittelstücks 1 entspricht, während das innere Ansatzstück 3 einen in Längsrichtung gleich bleibenden Innendurchmesser aufweist, der dem Innendurchmesser Dᵢ des Rohrmittelstücks 1 entspricht. Wenn die Rohre allerdings zusammengefügt sind, zeigt sich aufgrund der Vorspannung eine leichte Wölbung nach außen. Auch kann eine Verstärkung im Muffenbereich erforderlich sein, wenn die Rohre eine nur geringe Wandstärke haben.

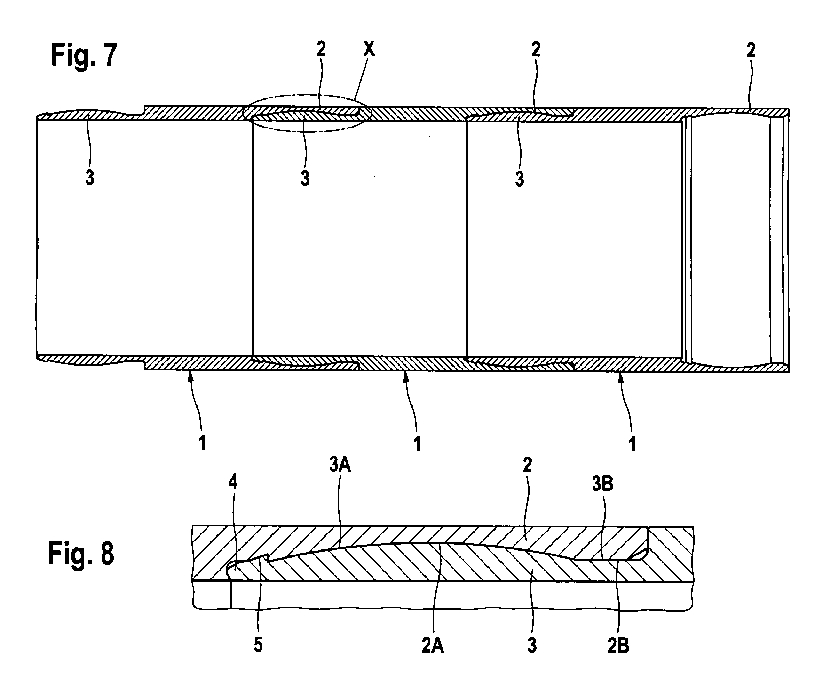

Die erfindungsgemäßen Rohre werden zu der Rohrleitung zusammengesteckt. Dabei ist das äußere Ansatzstück 2 des ersten Rohrs, das als Aufnahmestück ausgebildet ist, auf das innere Ansatzstück 3 des zweiten Rohrs aufgesteckt, das als Einsatzstück ausgebildet ist. Das äußere Ansatzstück des zweiten Rohrs ist wiederum auf das innere Ansatzstück des dritten Rohrs aufgesteckt (Fig. 7).

Das äußere Ansatzstück 2 des Rohrs weist eine nach außen gekrümmte Innenfläche 2A auf, deren Krümmung in Längsrichtung des Rohrs gleich bleibt. Die Krümmung kann in axialer Richtung aber auch unterschiedliche Radien aufweisen. Die Krümmung wird durch einen Radius R_{A} beschrieben. Der Radius R_{A} ist bei dem vorliegenden Ausführungsbeispiel beispielsweise 180,84 mm. Nur das Endstück 2B des äußeren Ansatzstücks 2 ist zylindrisch ausgebildet. Das äußere Ansatzstück 2 weist am freien Ende eine Fase 2C auf, so dass sich beim Zusammenfügen der Rohre das innere Ansatzstück 3 leicht in das äußere Ansatzstück 2 einschieben lässt.

Das innere Ansatzstück 3 des Rohrs weist eine nach außen gekrümmte Außenfläche 3A auf, deren Krümmung wieder in Längsrichtung des Rohrs gleich bleibt, aber auch unterschiedlich sein kann. Die Krümmung wird wieder durch einen Radius R_{B} beschrieben, der aber kleiner als der Radius R_{A} der Krümmung des äußeren Ansatzstücks 2 sein kann. Der Radius R_{B} ist bei dem vorliegenden Ausführungsbeispiel beispielsweise 160 mm. Das Verhältnis der Radien R_{A} und R_{B} kann aber auch anders sein.

Die nach außen gekrümmte Außenfläche 3A des inneren Ansatzstücks 3 geht in einen zylindrischen Bereich 3B über, dessen Länge der Länge des zylindrischen Endstücks 2B des äußeren Ansatzstücks 2 entspricht. An den zylindrischen Bereich 3B des inneren Ansatzstücks 3 schließt sich das Rohrmittelstück 1 an.

Zur Erzielung einer Vorspannung beim Zusammenstecken der Rohre ist der maximale Innendurchmesser D₂ des äußeren Ansatzstücks 2 kleiner als der maximale Außendurchmesser D₃ des inneren Ansatzstücks 3. Bei dem vorliegenden Ausführungsbeispiel ist der Durchmesser D₂ beispielsweise 233 mm, während der Durchmesser D₃ beispielsweise 234 mm ist. Mit einem größeren Unterschied zwischen den beiden Durchmessern D₂ und D₃ kann die Vorspannung weiter erhöht werden.

Zur axialen Sicherung der zusammengesteckten Rohre weisen die Ansatzstücke 2 und 3 Rastmittel auf. Die Rastmittel umfassen eine vorspringende Nase 4, die an dem freien Ende des inneren Ansatzstücks 3 ausgebildet ist, und eine entsprechende Ausnehmung 5, die an dem nicht freien Ende des äußeren Ansatzstücks 2 ausgebildet ist. Die Ausnehmung 5 liegt in dem Bereich des Rohrs, in dem das äußere Ansatzstück 2 in das Rohrmittelstück 1 übergeht. Fig. 4 zeigt die Ausnehmung 5 in vergrößerter Darstellung, während Fig. 5 die Rastnase 4 in vergrößerter Darstellung zeigt.

Die Rastnase 4 weist eine in den Zeichnungen nach vorne zeigende Schrägfläche 4A auf, die vom vorderen Ende des Rohrs schräg nach innen verläuft (Fig. 5). An das vordere Ende der Schrägfläche 4A schließt sich eine nach außen weisende Schrägfläche 4B an, die von dem vorderen Ende des Rohrs schräg nach außen verläuft. Die nach außen weisende Schrägfläche 4B springt in den Krümmungsradius 3A zurück, so dass sich eine Anlagefläche 4C ergibt. Die entsprechend geformte Ausnehmung 5, in die die Rastnase 4 einschnappend eingreift, weist eine komplementäre vordere Schrägfläche 5A auf, an die sich über einen Radius eine komplementäre äußere Schrägfläche 5B anschließt, die in einer komplementären Anlagefläche 5C endet.

Fig. 8 zeigt in vergrößerter Darstellung den Bereich, in dem zwei Rohre zusammengesteckt sind. Es ist ersichtlich, dass die Rastnase 4 des einen Rohrs in die Ausnehmung 5 des anderen Rohrs einrastend eingreift, in dem die beiden komplementären Anlageflächen 4C und 5C aneinander anliegen. Dadurch sind die Rohre in axialer Richtung gegen Entformen gesichert. Darüber ist aufgrund der unterschiedlichen Krümmungsradien R_{A}, R_{B} eine vollflächige Anlage zwischen den gekrümmten Flächen 2A, 3A der beiden Rohransatzstücke 2, 3 nicht gegeben ist. Vielmehr kommt es zu einer relativ kleinflächigen Anlage nur im mittleren Bereich der Steckverbindung. Beim Zusammenstecken der Rohre entsteht aufgrund des größeren maximalen Außendurchmessers D₃ des inneren Ansatzstücks 3 und des kleineren maximalen Innendurchmessers D₂ des äußeren Ansatzstücks 2 die angesprochene Vorspannung, die zur Erzielung der erforderlichen Dichtigkeit der Rohrleitung von Bedeutung ist.

Die beiden vorderen komplementären Schrägflächen 4A und 5A verhindern, dass sich das innere Ansatzstück 3 insbesondere im drucklosen Zustand nach innen relaxiert, wodurch die Vorspannung aufgehoben werden könnte. Eine derartige Verformung kann aufgrund der Materialeigenschaften insbesondere bei Temperaturwechseln auftreten. Beim Zusammenfügen der Rohre gleitet die äußere Schrägfläche 4B des inneren Ansatzstücks 3 auf der Fase 2C des äußeren Ansatzstücks 2, so dass sich die Rohre einfacher zusammenstecken lassen.

## Patentansprüche

1. Rohr für eine aus mehreren miteinander zu verbindenden Rohren bestehende Rohrleitung, mit
einem äußeren Ansatzstück (2), das als Aufnahmestück zum Aufnehmen des als Einsteckstück ausgebildeten inneren Ansatzstücks (3) eines anderen Rohrs der Rohrleitung ausgebildet ist, und
einem inneren Ansatzstück (3), das als Einsteckstück zum Einstecken in das als Aufnahmestück ausgebildeten äußeren Ansatzstücks (2) eines anderen Rohrs der Rohrleitung ausgebildet,
**dadurch gekennzeichnet, dass**
das äußere Ansatzstück (2) eine in Längsrichtung gekrümmte Innenfläche (2A) und das innere Ansatzstück (3) eine in Längsrichtung gekrümmte Außenfläche (3A) aufweisen, wobei die Flächen des äußeren und inneren Ansatzstücks (2, 3) unterschiedliche Krümmungen (R_{A}, R_{B}) haben, wobei
der maximale Innendurchmesser (D₂) der gekrümmten Innenfläche (2A) des äußeren Ansatzstücks (2) kleiner als der maximale Außendurchmesser (D₃) der gekrümmten Außenfläche (3A) des inneren Ansatzstücks (3) ist, so dass
beim Einstecken des inneren Ansatzstücks eines anderen Rohrs der Rohrleitung in das äußere Ansatzstück oder das Aufstecken des äußeren Ansatzstücks eines anderen Rohrs der Rohrleitung auf das innere Ansatzstück zwischen den zusammengesteckten Ansatzstücken eine Vorspannung entsteht.

2. Rohr nach Anspruch 1, **dadurch gekennzeichnet, dass** die gekrümmte Innenfläche (2A) des äußeren Ansatzstücks (2) in Längsrichtung die gleiche Krümmung hat.

3. Rohr nach Anspruch 1 oder 2, **dadurch gekennzeichnet, dass** die gekrümmte Außenfläche (3A) des inneren Ansatzstücks (3) in Längsrichtung die gleiche Krümmung hat.

4. Rohr nach einem der Ansprüche 1 bis 3, **dadurch gekennzeichnet, dass** der Krümmungsradius (R_{A}) der gekrümmten Fläche (2A) des äußeren Ansatzstücks (2) größer als der Krümmungsradius (R_{B}) der gekrümmten Fläche (3) des inneren Ansatzstücks (3) ist.

5. Rohr nach einem der Ansprüche 1 bis 4, **dadurch gekennzeichnet, dass** das äußere Ansatzstück (2) eine in Längsrichtung nach außen gekrümmte Innenfläche (2A) und das innere Ansatzstück (3) eine in Längsrichtung nach außen gekrümmte Außenfläche (3A) aufweist.

6. Rohr nach einem der Ansprüche 1 bis 5, **dadurch gekennzeichnet, dass** an dem äußeren Ansatzstück (2) und dem inneren Ansatzstück (3) Rastmittel (4, 5) vorgesehen sind, die derart ausgebildet sind, dass das innere Ansatzstück eines anderen Rohrs der Rohrleitung in das äußere Ansatzstück einrastend einsteckbar oder das äußere Ansatzstück eines anderen Rohrs der Rohrleitung auf das innere Ansatzstück einrastend aufsteckbar ist, so dass die miteinander verbundenen Rohre in Längsrichtung gesichert sind.

7. Rohr nach Anspruch 6, **dadurch gekennzeichnet, dass** an dem freien Ende des inneren Ansatzstücks (3) eine vorspringende Nase (4) und an dem nicht freien Ende des äußeren Ansatzstücks (3) eine Ausnehmung (5) vorgesehen ist, so dass beim Einstecken des inneren Ansatzstücks eines anderen Rohrs der Rohrleitung in das äußere Ansatzstück oder das Aufstecken des äußeren Ansatzstücks eines anderen Rohrs der Rohrleitung auf das innere Ansatzstück die vorspringende Nase in die Ausnehmung einschnappend einrastet.

8. Rohr nach einem der Ansprüche 1 bis 7, **dadurch gekennzeichnet, dass** das äußere Ansatzstück (2) den gleichen Außendurchmesser (Dₐ) wie das Rohrmittelstück (1) aufweist.

9. Rohr nach einem der Ansprüche 1 bis 8, **dadurch gekennzeichnet, dass** das innere Ansatzstück (3) den gleichen Innendurchmesser (Dᵢ) wie das Rohrmittelstück (1) aufweist.

10. Rohr nach einem der Ansprüche 1 bis 9, **dadurch gekennzeichnet, dass** das Rohr ein Kunststoffrohr ist.

11. Rohrleitung mit mehreren Rohren nach einem der Ansprüche 1 bis 10.

12. Verfahren zum Verbinden von mindestens zwei Rohren nach einem der Ansprüche 1 bis 11, **dadurch gekennzeichnet, dass** das innere Ansatzstück des zweiten Rohrs in das äußere Ansatzstück des ersten Rohrs eingesteckt oder das äußere Ansatzstück des zweiten Rohrs auf das innere Ansatzstück des ersten Rohrs aufgesteckt wird.

13. Verfahren nach Anspruch 12, **dadurch gekennzeichnet, dass** in den beiden Rohren ein Innendruck aufgebracht wird, in dem durch die beiden Rohre ein unter Druck stehendes Medium geleitet wird.
